# NEW EUROPEAN PATENT SPECIFICATION

(11) **EP 1 490 582 B2**
(45) Date of publication and mention of the opposition decision: **15.01.2014**
(45) Mention of the grant of the patent: 21.02.2007
(21) Application number: 03708791.3
(22) Date of filing: 14.03.2003
(51) Int. Cl.: E21B 44/00, G06T 7/60

(54) **METHOD OF LOCALIZING A HOLE DRILLED WITH A ROCK DRILLING MACHINE**
VERFAHREN ZUR LOKALISIERUNG EINES MIT EINER GESTEINSBOHRMASCHINE GEBOHRTEN LOCHS
PROCEDE DE LOCALISATION D'UN TROU FORE AVEC UNE MACHINE DE FORAGE DE ROCHES

(30) Priority: 04.04.2002 SE 0201014
(43) Date of publication of application: 29.12.2004
(73) Proprietor: Atlas Copco Rock Drills AB, 701 91 Örebro (SE)
(72) Inventor: PLANESKOG, Bertil, S-702 34 Örebro (SE); GUSTAVSSON, Hans, S-703 78 Örebro (SE)
(74) Representative: Hammond, Andrew David
(86) International application number: PCT/SE2003/000426
(87) International publication number: WO 2003/085233

(56) References cited:
- EP-A1- 0 417 055
- EP-A1- 0 822 029
- US-A- 4 647 208
- US-A- 5 579 415
- US-A- 5 771 309
- "Vision based control for mining automation"P. Corke et Al, IEEE Robotics & Automation magazine, pages 44-49, Dec 1998

## Description

The present invention relates to a method of localizing a hole drilled with a rock drilling machine, e.g. in connection with rock bolting and a rock drilling rig.

According to a previously known method for rock bolting with rig a feed beam on a rock drilling rig is applied steadily against the rock after which a hole is drilled with a rock drilling machine. After that the rock drilling machine is moved away and a device for bolting is moved in place for entering a rock bolt into the drilled hole. Other steps can also be there depending on type of rock bolt. In order to make it practically possible to move the rock bolt into the hole the steady application against the rock must be kept during the sequence of drilling and bolt setting. The reason for this is that large masses are moving when the feed beam is positioned. Since the rock drilling rig has several links between the carrier and the application point against the rock sufficient precision in the alignment against the drilled hole is not achieved if the rock drilling rig's own alignment system is used. Neither is it practically possible to split drilling and bolting between different boom units on the rock drilling rig.

A method as in the preamble of claim 1 is known from EP 0 417 055 A.

Peter Corke et al : Vision-Based Control for Mining Automation, IEEE Robotics & Automation Magazine Dec. 1998, discloses a visual servo system intended for use in mines.

The present invention, which is defined in the subsequent claim, aims at achieving a method and a rock drilling rig which makes possible a high degree of automation at rock bolting and also drilling and bolting with separate booms for the units used for drilling and bolting.

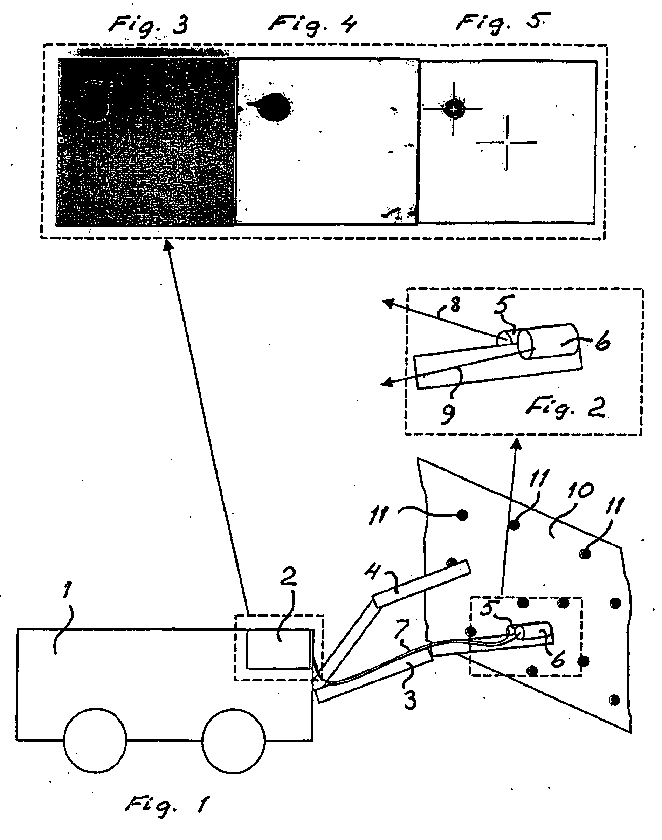

An embodiment of the invention is described below with reference to the accompanying drawing in which fig 1 shows a rock drilling rig. Fig 2 shows on a larger scale a part of the rock drilling rig according to fig 1. Figs 3-5 show pictures of a rock surface with different degrees of image processing.

The rock drilling rig shown in the drawing comprises a carrier 1 on which, in the shown example, two booms 3 and 4 are arranged. The rock drilling rig is provided with a computer 2. On boom 3 a digital camera 5 and a distance meter 6 are arranged. These are connected with the computer 2 by means of conductors 7 or by means of wireless conections 8 and 9. The distance meter suitably works with ultrasonics. Drilling is done in a rock surface 10 which, in fig 1, is shown by means of black holes 11. In the shown example drilling is performed by means of a rock drilling machine arranged on boom 4. The drilled hole is then localized by means of the digital camera 5, the distance meter 6 and the computer 2. One can also have rock drilling machine, digital camera and distance meter on the same boom. It is thereby not necessary to hold the boom steadily against the rock surface 10 between drilling and the subsequent localization of the drilled hole.

The method according to the invention works in the following way. First one or more holes 11 are rilled in the rock surface 10 by means of a rock drilling machine mounted on one of the booms 3 or 4. In order to localize a drilled hole boom 3 is aligned with the aid of the positioning system of the drill rig so that the digital camera 5 and the distance meter 6 are near the hole to be localized. A picture of the rock surface 10 is stored in the computer, fig 3. Furthermore, the measured distance is stored in the computer. The stored picture, fig 3, contains a black hole with the rest in different shades of gray. With the aid of a program stored in the computer a new picture, fig 4, is created which only contains black and white spots. This picture is filtered so that only black parts within a predetermined size range remain, fig 5. The picture matrix is scanned to determine the outer coordinates of the black part. This area is compared with the size of a drilled hole though calculating the real size of the picture matrix with the aid of the outer coordinates and the measured distance. When an area corresponding to the size and form of a drilled hole, known size, has been found the coordinates of the centre of the area is determined. After that a boom can be aligned against the hole with the aid of the coordinates, e.g. for inserting a rock bolt.

## Claims

1. Method of localizing a hole (11) drilled with a rock drilling machine comprising positioning a boom (3) arranged on a rock drilling rig near the drilled hole with the aid of a positioning system arranged on the rock drilling rig,
**characterized in that**
a digital picture is created by means of a camera (5) arranged on the boom (3), that a distance between the boom (3) and the drilled hole (11) is measured by means of a distance meter (6),
that the digital picture is stored in a computer (2),
that the stored picture is transformed to a picture containing only black and white parts,
that the picture with only black and white parts is scanned to find a black part with a size within a size interval corresponding to the drilled hole
and that the position of the drill hole mouth in the room is determined with the aid of the position of the black part and the measured distance.

2. A rock drilling rig comprising:
a carrier (1) having one or two booms (3, 4);
a computer (2);
a digital camera (5) and a distance meter (6) arranged on one of said one or two booms (3, 4), said digital camera and distance meter being connected to the computer (2);
a rock drilling machine arranged on one of said one or two booms (3, 4), and
a positioning system for positioning said one or two booms;
said rock drilling rig being arranged to:
localize a hole (11) drilled with said rock drilling machine by positioning one of said booms (3) near the drilled hole with the aid of said positioning system;
create a digital picture by means of said camera (5);
measure a distance between said boom (3) and said drilled hole (11) by means of said distance meter (6);
store said digital picture in said computer (2);
transform said stored picture into a picture containing only black and white parts;
scan said picture with only black and white parts to find a black part with a size within a size interval corresponding to the drilled hole, and
determine the position of the drill hole mouth in the room with the aid of the position of the black part and the measured distance.

## Patentansprüche

1. Verfahren zum Lokalisieren eines Lochs (11), das mit einer Gesteinsbohrmaschine gebohrt wurde, umfassend die Positionierung eines Auslegers (3) angeordnet auf einer Gesteinsbohranlage in der Nähe des gebohrten Loches mit Hilfe eines Positionierungssystems angeordnet auf der Gesteinsbohranlage, **dadurch gekennzeichnet, dass** ein digitales Bild mittels einer auf dem Ausleger (3) angeordneten Kamera (5) erstellt wird, dass eine Distanz zwischen dem Ausleger (3) und dem gebohrten Loch (11) mittels eines Distanzmessgeräts (6) gemessen wird, dass das digitale Bild in einem Computer (2) gespeichert wird, dass das gespeicherte Bild in ein Bild, das nur Schwarz- und Weißbestandteile beinhaltet, umgewandelt wird, dass das Bild mit nur Schwarz- und Weißbestandteilen gescannt wird, um einen schwarzen Bestandteil mit einer Größe innerhalb eines dem gebohrten Loch entsprechenden Größenintervalls zu finden, und dass die Position der Bohrlochöffnung im Raum mit Hilfe der Position des schwarzen Bestandteils und der gemessenen Distanz bestimmt wird.

2. Gesteinsbohrgerät, das Folgendes aufweist:
einen Träger mit einem oder zwei Auslegern (3, 4);
einen Computer (2);
eine Digitalkamera (5) und ein Distanzmessgerät (6), die an einem oder an einem der beiden Ausleger (3, 4) angeordnet sind, wobei die Digitalkamera und das Distanzmessgerät mit dem Computer (2) verbunden sind;
eine Gesteinsbohrmaschine, die an einem oder an einem der beiden Ausleger (3, 4) angeordnet ist, und ein Positionierungssystem zur Positionierung des einen oder der beiden Ausleger;
wobei das Gesteinsbohrgerät für Folgendes konzipiert ist:
Lokalisieren eines Loches (11), das mit der Gesteinsbohrmaschine gebohrt wurde, durch Positionieren eines der Ausleger (3) in der Nähe des gebohrten Loches mit Hilfe des Positionierungssystems;
Erstellen eines digitalen Bildes mittels der Kamera (5);
Messen einer Distanz zwischen dem Ausleger (3) und dem gebohrten Loch (11) mittels des Distanzmessgerätes (6);
Abspeichern des digitalen Bildes in dem Computer (2);
Umwandeln des gespeicherten Bildes in ein Bild, das nur Schwarz- und Weißbestandteile beinhaltet;
Scannen des Bildes mit lediglich Schwarz- und Weißbestandteilen, um einen schwarzen Bestandteil mit einer Größe innerhalb eines dem gebohrten Loch entsprechenden Größenintervalls zu finden, und
Bestimmen der Position der Bohrlochöffnung im Raum mit Hilfe der Position des schwarzen Bestandteils und der gemessenen Distanz.

## Revendications

1. Procédé de localisation d'un trou (11) foré avec une machine de forage de roche comprenant le positionnement d'une perche (3) agencée sur un appareil de forage de roche à proximité d'un trou foré au moyen d'un système de positionnement agencé sur l'appareil de forage de roche,
**caractérisé en ce que**
une image numérique est créée au moyen d'une caméra (5) agencée sur la perche (3),
**en ce qu'**une distance entre la perche (3) et le trou foré (11) est mesurée au moyen d'un dispositif de mesure de distance (6),
**en ce que** l'image numérique est mémorisée dans un ordinateur (2),
**en ce que** l'image mémorisée est transformée en une image contenant uniquement des parties noires et blanches,
**en ce que** l'image avec uniquement des parties noires et blanches est balayée pour trouver une partie noire avec une taille dans un intervalle de tailles correspondant au trou foré
et **en ce que** la position de l'ouverture du trou de forage dans la pièce est déterminée au moyen de la position de la partie noire et de la distance mesurée.

2. Appareil de forage de roche comprenant :
un support (1) comportant une ou deux perches (3, 4) ;
un ordinateur (2) ;
une caméra numérique (5) et un dispositif de mesure de distance (6) agencés sur l'une desdites une ou deux perches (3, 4), ladite caméra numérique et le dispositif de mesure de distance étant connectés à l'ordinateur (2) ;
une machine de forage de roche agencée sur l'une desdites une ou deux perches (3, 4), et
un système de positionnement pour positionner lesdites une ou deux perches ;
ledit appareil de forage de roche étant agencé pour :
localiser un trou (11) foré avec ladite machine de forage de roche en positionnant l'une desdites perches (3) à proximité du trou foré au moyen dudit système de positionnement ;
créer une image numérique au moyen de ladite caméra (5) ;
mesurer une distance entre ladite perche (3) et ledit trou (11) foré au moyen dudit dispositif de mesure de distance (6) ;
mémoriser ladite image numérique dans ledit ordinateur (2) ;
transformer ladite image mémorisée en une image contenant uniquement des parties noires et blanches ;
balayer ladite image avec uniquement des parties noires et blanches pour trouver une partie noire avec une taille dans un intervalle de tailles correspondant au trou foré ; et
déterminer la position de l'ouverture du trou de forage dans la pièce au moyen de la position de la partie noire et de la distance mesurée.
